# EUROPEAN PATENT SPECIFICATION

(11) **EP 0 959 255 B1**
(45) Date of publication and mention of the grant of the patent: **07.01.2004**
(21) Application number: 99303918.9
(22) Date of filing: 20.05.1999
(51) Int. Cl.: F16B 7/18

(54) **A connector**
Verbinder
Connecteur

(30) Priority: 22.05.1998 GB 9810943
(43) Date of publication of application: 24.11.1999
(73) Proprietor: Wilde, Melvyn, Wigan, Lancs. WN2 2BH (GB)
(72) Inventor: Wilde, Melvyn, Wigan, Lancs. WN2 2BH (GB)
(74) Representative: Ajello, Michael John

(56) References cited:
- DE-A- 3 147 306
- GB-A- 1 566 914

## Description

THIS INVENTION concerns a system comprising two members and a device for connecting them together at a right-angle. The system has particular application in the production of structures which are to be load-bearing such as a collapsible stool or the like used, for example, by anglers. Such articles are often made from interconnected struts of square-sectioned tubular aluminium and the present invention is concerned with a system for connecting together two such struts.

Preferably, though not exclusively, the members are two tubular members of a rectangular transverse section.

Such a system is disclosed in patent specification DE-A-3147306 wherein a first tubular strut, in an end region thereof, passes through an aperture in the wall of a second tubular member and through a further aperture in the opposed wall thereof. A hinged insert is located in the end region of the first tubular member to receive a bolt which opens up the hinged insert, and the insert comprises a pair of integral projections which when the hinged member is opened up pass through opposed apertures in the wall of a first tubular member. Such a system as described therein, is not, however, suitable for attaching together to two tubular members of equal width where one must abut the outer surface of the other rather than passing therethrough. Furthermore, it is necessary to spread the entire insert so that the projections will extend through the apertures in the first tubular member.

According to the present invention, there is provided a system comprising first and second members and a device for connecting the two members at least one of which is an open ended tube having at least one aperture in the tube wall at a position thereon near to its open end, the device comprising a first part insertable into the tube end and having a part moveable outwardly to become engaged in said at least one aperture in the tube wall, and a second part engageable with the second member and drivable into the first part to move the said moveable part outwardly into said aperture; characterised in that the first part includes at least one recess containing at least one shoot bolt having a chamfered face; and in that the second part includes a chamfered face to contact the chamfered face of the shoot bolt thus to advance the shoot bolt outwardly through the aperture and thus to connect and lock the two members together.

Preferably, the two members are both of tubular cross-section, there being a pair of opposed such apertures adjacent the open end of the first members, and the first part of the device contains a pair of independently movable shoot bolts engageable respectively with said pair of apertures.

The tubular members may be square in cross-section.

The second part of the device may be a bolt drivable through said other member into the first part to locate between the pair of shoot bolts to push them apart.

The first part may include a spigot insertable through an aperture in the wall of the second member and engageable with a third part insertable within the second tubular member, through which said bolt may pass.

The spigot may be enageable with the third part selectively at different angular dispositions thereon whereby the or each shoot bolt may advance in a direction parallel to the second tubular member or in a different direction.

The third part may include means to determine its orientation within the second tubular member and to prevent its rotation therein.

An embodiment of the invention will now be described, by way of example only, with reference to the accompanying drawings, in which:-
Fig. 1 is a perspective view of two tubular members connected together by means of a device made in accordance with the invention;
Fig. 2 is a horizontal cross-section through the two members connected by the device;
Fig. 3 is a plan view of the device before introduction to the members to be connected;
Fig. 4 is a view taken in the direction of arrows IV-IV in Fig. 3; and
Fig. 5 is a view taken in the direction of arrows V-V in Fig. 3.

Referring now to the drawings, it will be assumed for the sake of this description, that a system in accordance with the invention is for connecting together, at right angles to one another, two square sectioned tubular members 10 and 11 and again for the purpose of description it will be assumed that the member 10 is to be vertical and the member 11 horizontal. If a rigid and reliable connection between the two members is to be assured then any connector used for this purpose must be capable of being tightened to prevent any relative movement whatsoever.

The tubular member 11 has a pair of aligned apertures 12 extending through opposed vertical walls of the tubular member 11.

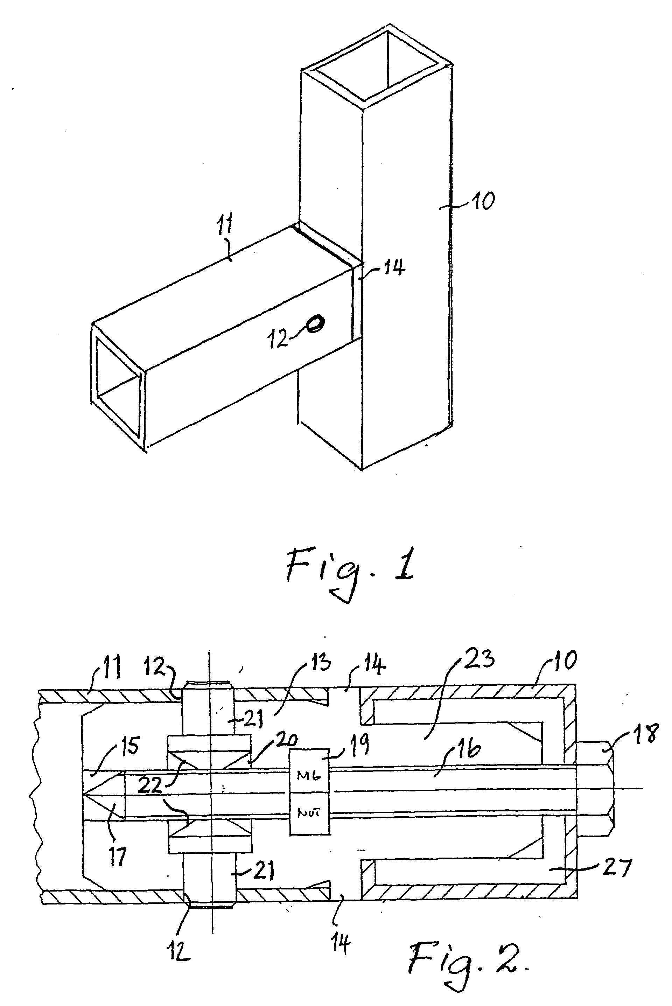

The connector of this invention comprises a first part 13 (see Fig. 2) which is of generally square formation to be inserted with a resistance fit into the open end of the tube 11 adjacent the apertures 12. A shoulder 14 of square formation and equivalent in dimensions to the outer surface of the tube 11 is integrally formed with the first part 13. Thus, as can be seen in Fig. 1, the shoulder 14 is exposed between the members 10 and 11 when the joint is assembled.

The part 13 preferably comprises two identical moulded half pieces which combine to define a central passage 15 passing longitudinally through the part and adapted, as will be described, to receive a bolt 16 having a chamfered or pointed end 17 and a head 18. A recess is provided within the first part 13 to receive a hexagonal nut 19 which thus becomes captive between the two halves of the part 13. Further confronting recesses 20 in the two halves of the part 13 contain a pair of opposed shoot bolts 21 having confronting chamfered faces 22.

The first part 13 extends beyond shoulder 14 to form a spigot 23 which when the members are assembled, projects through an aperture in the wall of the member 10 as can be seen in Fig. 2. Bolt 16 passes through the wall of the member 10, through the spigot 23, along the passage 15, through the nut 19 and through the recess 20 thus, as can be seen from Fig. 2, to push or advance (with its chamfered end 17) the shoot bolts 21 (with their complementary chamfered faces 22) outwardly in opposite horizontal direction to engage and pass through the opposed apertures 12 in the wall of the tube 11. Thus, by tightening the bolt 16 the entire assembly is fixedly and rigidly attached together.

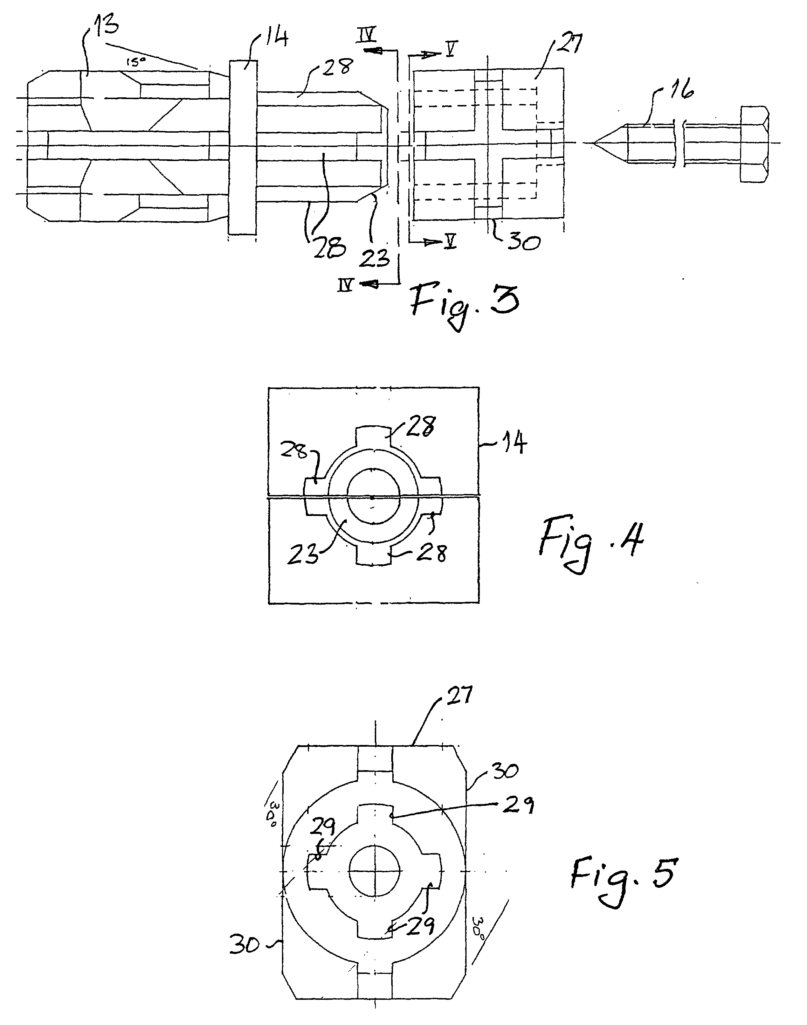

A third part of the device comprises a collar or shoe 27 which may be slidably engaged within the tube 10 and through which the bolt 16 may pass into the spigot 23. As will be seen from Figs. 3 to 4, the spigot 23 and shoe 27 have matching and inter-engaging radial projections 28 and longitudinal slots 29 respectively whereby the spigot 23 and shoe 27 become inter-engaged in a fixed relative rotational disposition.

The shoe 27 has flats 30 which determine its angular position within the tube 10 and prevent its rotation therein. However, owing to the slots 29 and projections 28, the spigot 23 and the first part 13 integrally formed therewith may be rotated to several positions about the axis of the bolt 16. In this manner, the tube 11 may be attached to the tube 10 and a different axially rotated angle thereon. Thus, in particular, the apertures 12 may be aligned vertically or horizontally. In the present example these are the only option but by providing a different arrangement of projections and slots it is possible for the tube 11 to be disposed in different rotational positions about its longitudinal axis in relation to the tube 10.

The first part 13, the spigot 23 and the shoe 27, together with the shoot bolts 21, and if required, the nut 19 and the bolt 16 may all be moulded from a rigid plastics material or they may be of steel, brass or other metal.

The tube 10 may be replaced by a flat bar or any other device to be rigidly connected to an open end of the tube 11 in which case the spigot 23 and the shoe 27 may be omitted or replaced by any other suitable part which engages with and locates the member to be attached to the tubular member.

The tubular members are preferably of aluminium but again they may be of other metal or of plastics.

The shoulder 14 may be omitted but is preferred to provide a square and geometrically sound interface between the two members. If of plastics, the shoulder 14 further provides a relatively soft part to absorb any burrs or the like on the adjacent faces of the two members to be joined.

Furthermore, in some cases, a single aperture 12 and aligned shoot bolt 21 may be sufficient to provide for rigid connection.

## Claims

1. A system comprising first and second members (10, 11) and a device for connecting the two members at least one of which is an open ended tube (11) having at least one aperture (12) in the tube wall at a position thereon near to its open end, the device comprising a first part (13) insertable into the tube (11) end and having a part moveable outwardly to become engaged in said at least one aperture (12) in the tube wall, and a second part (16) engageable with the second member (10) and drivable into the first part (13) to move the said moveable part outwardly into said aperture (12); **characterised in that** the first part (13) includes at least one recess containing at least one shoot bolt (21) having a chamfered face (22); and **in that** the second part (16) includes a chamfered face (17) to contact the chamfered face (22) of the shoot bolt (21) thus to advance the shoot bolt (21) outwardly through the aperture (12) and thus to connect and lock the two members (10, 11) together.

2. A system according to claim 1, wherein the two members (10, 11) are both of tubular cross-section, there being a pair of opposed such apertures (12) adjacent the open end of the first member (11), and the first part (13) of the device containing a pair of independently movable shoot bolts (21) engageable respectively with said pair of apertures (12).

3. A system according to claim 2, wherein the tubular members (10, 11) are square in cross-section.

4. A system according to claim 2, wherein the second part (16) is a bolt drivable through said second member (10) into the first part (13) to locate between the pair of shoot bolts (21) to push them apart.

5. A system according to any one of claims 2 to 4, wherein the first part (13) includes a spigot (23) insertable through an aperture in the wall of the second member (10) and engageable with a third part (27) insertable within the second member (10), through which said second part (16) may pass.

6. A system according to claim 5, wherein the spigot (23) is engageable with the third part (27) selectively at different angular dispositions thereon whereby the shoot bolts (21) may advance in a direction parallel to the second tubular member (10) or in a different direction.

7. A system according to claim 5, or claim 6, wherein the third part (27) includes means to determine its orientation within the second tubular member (10) and to prevent its rotation therein.

8. A system according to claim 2, wherein the pair of opposed apertures (12) extend through opposed vertical walls of the first tubular member (11).

9. A system according to claim 4, wherein the first part (13) comprises two identical half pieces which combine to define a central passage (15) passing longitudinally through the part (13) and adapted to receive the bolt (16), a recess being provided about said central passage to receive a nut (19) which thus becomes captive between the two half pieces of the first part (13), to receive the bolt (16) such that advancing the bolt along the passage (15) enables engagement with the opposed shoot bolts (21) to separate and advance them into the pair or apertures (12) in the tube wall.

10. A system according to any one of claims 5 to 7, wherein the first part (13), the spigot (23), the third part (27) and the or each shoot bolt (21) is moulded from a rigid plastics material, the first part (13) having an integral plastics shoulder (14) which locates between the tube (11) end and an adjacent face of the second member (10) when the two members (10, 11) are connected together.

## Patentansprüche

1. Ein System aus einem ersten und zweiten Bauteil (10, 11) und einer Vorrichtung zur Verbindung beider Bauteile, von denen mindestens eins ein am Ende offenes Rohr (11) mit mindestens einer Öffnung (12) in der Rohrwand nahe dem offenen Ende ist, wobei die Vorrichtung aus einem ersten in das Ende des Rohrs (11) einschiebbaren Teil (13) mit einem zum Eingriff in die zumindest einmal vorhandene Öffnung (12) in der Rohrwand nach außen beweglichen Teil und einem zweiten mit dem zweiten Bauteil (10) einrastbaren und in das erste Bauteil (13) einschiebbaren Teil (16) zum Austreiben des beweglichen Teils in die Öffnung (12) besteht, **gekennzeichnet durch** mindestens eine Aussparung zur Aufnahme mindestens eines Einschubbolzens (21) mit abgefaster Stirnfläche (22) am ersten Teil (13) und eine abgefaste Stirnfläche (17) zur Anlage an die abgefaste Stirnfläche (22) des Einschubbolzens (21) und zu dessen Austreibung **durch** die Öffnung (12) und somit zur Verbindung und Verriegelung der beiden Bauteile (10, 11) miteinander am zweiten Teil (16).

2. Ein System gemäß Anspruch 1 mit rohrförmigem Querschnitt der beiden Bauteile (10, 11), einem Paar gegenüberliegender Öffnungen (12) nahe dem offenen Ende des ersten Bauteils (11) und einem Paar unabhängig voneinander beweglicher und im ersten Teil (13) angeordneter Einschubbolzen (21) zum Eingriff in das jeweilige Paar Öffnungen (12).

3. Ein System gemäß Anspruch 2 mit quadratischem Querschnitt der rohrförmigen Bauteile (10, 11).

4. Ein System gemäß Anspruch 2, bei dem das zweite Teil (16) ein durch das zweite Bauteil (10) in das erste Teil (13) und zwischen das Paar Einschubbolzen (21) zu deren Aufspreizen verschiebbarer Bolzen ist.

5. Ein System gemäß den Ansprüchen 2-4, bei dem das erste Teil (13) einen Zapfen (23) enthält, der durch eine Öffnung in der Wand des zweiten Bauteils (10) eingeführt werden und in ein drittes Teil (27) eingreifen kann, das in das zweite Bauteil (10) einführbar ist, durch welches das zweite Teil (16) geführt werden kann.

6. Ein System gemäß Anspruch 5, bei dem der Zapfen (23) wahlweise in unterschiedlichen Winkelstellungen mit dem dritten Teil (27) in Eingriff gebracht werden kann, so dass die Einschubbolzen (21) sich parallel zum zweiten rohrförmigen Bauteil (10) oder in einer anderen Richtung bewegen können.

7. Ein System gemäß Anspruch 5 oder 6, bei dem das dritte Teil (27) Hilfsmittel zur Bestimmung seiner Ausrichtung und Verhinderung einer Drehung innerhalb des zweiten rohrförmigen Bauteils (10) enthält.

8. Ein System gemäß Anspruch 2, bei dem das Paar gegenüberliegender Öffnungen (12) durch gegenüberliegende senkrechte Wände des ersten rohrförmigen Bauteils (11) verläuft.

9. Ein System gemäß Anspruch 4, bei dem das erste Teil (13) aus zwei gleichen Hälften besteht, die zusammen in Längsrichtung durch das Teil (13) eine mittige Durchführung (15) zur Aufnahme eines Bolzens (16) mit einer Aussparung zur Aufnahme und Arretierung einer Mutter (19) zwischen den beiden Hälften des ersten Teils (13) bilden, die den Bolzen (16) so aufnimmt, dass sein Vorschub durch die Führung (15) den Eingriff mit den gegenüberliegenden Einschubbolzen (21) deren Aufspreizung und Eingriff in das Öffnungspaar (12) in der Rohrwand ermöglicht.

10. Ein System gemäß den Ansprüchen 5 - 7, bei dem das erste Teil (13), der Zapfen (23), das dritte Teil (27) und der oder die Einschubbolzen (21) Formteile aus Hartkunststoff sind und das erste Teil (13) einen eingebauten Kunststoffrand (14) zur Aufnahme zwischen dem Ende des Rohrs (11) und der angrenzenden Stirnfläche des zweiten Bauteils (10) bei der Verbindung der beiden Bauteile (10, 11) besitzt.

## Revendications

1. Un système comprenant un premier et un second élément (10, 11) et un dispositif pour relier les deux éléments, dont l'un au moins est un tube à extrémité ouverte (11) ayant au moins une ouverture (12) dans la paroi du tube à un emplacement proche de son extrémité ouverte, le dispositif comprenant une première pièce (13) pouvant être insérée dans l'extrémité du tube (11) et ayant une pièce pouvant être déplacée vers l'extérieur pour s'engager dans au moins une ouverture (12) de la paroi du tube et une seconde pièce (16) pouvant être engagée avec le second élément (10) et être poussée dans la première pièce (13) pour déplacer la pièce mobile en question vers l'extérieur dans ladite ouverture (12) ; **caractérisé par le fait que** la première pièce (13) comporte au moins une cavité contenant au moins un boulon éjecteur (21) muni d'une face biseautée (22) ; et que la seconde pièce (16) comporte une face biseautée (17) pour entrer en contact avec la face biseautée (22) du boulon éjecteur (21), pour faire avancer le boulon éjecteur (21) vers l'extérieure par l'ouverture (12) pour relier et verouiller ainsi les deux éléments ensemble (10, 11).

2. Un système selon la Revendication 1, dans lequel les deux éléments (10, 11) ont tous deux une section tubulaire, il existe deux ouvertures opposées (12) proches de l'extrémité ouverte du premier élément (11) et la première pièce (13) du dispositif contenant deux boulons éjecteurs (21) qui peuvent se déplacer indépendamment et peuvent s'engager respectivement dans les deux ouvertures (12) en question.

3. Un système selon la Revendication 2, dans lequel les éléments tubulaires (10, 11) ont une section carrée.

4. Un système selon la Revendication 2, dans lequel la seconde pièce (16) est un boulon qui peut être enfoncé à travers ledit second élément (10) dans la première pièce (13) pour se placer entre les deux boulons éjecteurs (21) et les séparer en les poussant.

5. Un système selon n'importe laquelle des Revendications de 2 à 4, dans lequel la première pièce (13) comporte un goujon (23) qui peut être inséré dans une ouverture de la paroi du second élément (10) et s'engager avec une troisième pièce (27) dans le second élément (10) à travers lequel ladite seconde pièce (16) peut passer.

6. Un système selon la Revendication 5, dans lequel le goujon (23) peut s'engager avec la troisième pièce (27) sélectivement à différentes positions angulaires entraînant ainsi les boulons éjecteurs (21) à avancer dans une direction parallèle au second élément tubulaire (10) ou dans une direction différene.

7. Un système selon la Revendication 5 ou 6, dans lequel la troisième pièce (27) comprend un moyen pour déterminer son orientation à l'intérieur du second élément tubulaire (10) et empêcher ainsi sa rotation à l'intérieur du même.

8. Un système selon la Revendication 2, dans lequel les deux ouvertures opposées (12) se prolongent dans les deux parois opposées du premier élément tubulaire (11).

9. Un système selon la Revendication 4, dans lequel la première pièce (13) comprend deux demi-pièces identiques qui se combinent pour définir un passage central (15) passant longitudinalement à travers la pièce (13) et qui sont adaptées pour recevoir le boulon (16), une cavité étant prévue autour de ce passage central pour recevoir un écrou (19) qui devient ainsi prisonnier entre les deux demi-pièces de la première pièce (13) pour recevoir le boulon (16) faisant avancer le boulon dans le passage (15) et permettant l'engagement avec les boulons éjecteurs opposés (21) pour les séparer et les faire avancer dans les deux ouvertures (12) dans la paroi de tube.

10. Un système selon n'importe laquelle des Révendication de 5 à 7 dans lequel la première pièce (13), le goujon (23), la troisième pièce (27) et le ou les boulons éjecteurs (21) sont moulés dans un matériau plastique rigide, la première pièce (13) ayant un épaulement intégral en plastique (14) qui se place entre l'extrémité de tube (11) et une face proche du second élément (10) lorsque les deux éléments (10, 11) sont reliés ensemble.
